# EUROPEAN PATENT APPLICATION

(11) **EP 4 557 472 A1**
(43) Date of publication of application: **21.05.2025**
(21) Application number: 23839275.7
(22) Date of filing: 01.05.2023
(51) Int. Cl.: H01M 50/184, H01M 10/613, H01M 10/647, H01M 50/105, H01M 50/136, H01M 50/186, H01M 50/198, H01M 50/211

(54) **BATTERY CELL AND BATTERY MODULE**

(30) Priority: 15.07.2022 JP 2022113840; 15.07.2022 JP 2022113839
(71) Applicant: AESC Japan Ltd., Kanagawa, 2520012 (JP)
(72) Inventor: OKAZUMI Ryoma, Zama-shi, Kanagawa 252-0012 (JP); MONNO Dai, Zama-shi, Kanagawa 252-0012 (JP); NAKAI Masayuki, Zama-shi, Kanagawa 252-0012 (JP); IZAWA Takami, Zama-shi, Kanagawa 252-0012 (JP); OOKA Aika, Zama-shi, Kanagawa 252-0012 (JP)
(74) Representative: Mathys & Squire
(86) International application number: PCT/JP2023/017010
(87) International publication number: WO 2024/014097

(57) **Abstract**

A battery cell (10) includes a battery element (100), an exterior member (120) that accommodates the battery element (100), and a first protective tape (136a) that covers at least a part of a right sealing edge (126b) of the exterior member (120).

## Description

### TECHNICAL FIELD

The present invention relates to a battery cell and a battery module.

### BACKGROUND ART

In recent years, various structures of a battery cell such as a lithium-ion secondary battery cell have been developed. For example, as described in Patent Document 1, a battery cell includes a battery element and an exterior member. The exterior member includes an upper exterior member that covers an upper portion of the battery element, and a lower exterior member that covers a lower portion of the battery element. A sealing edge is formed on the exterior member by thermal fusion of the upper exterior member and the lower exterior member. In the battery cell described in Patent Document 1, the sealing edge of the battery element along a longitudinal direction is bent into a predetermined bending shape. The sealing edge is provided with a tape that fixes the bending shape of the sealing edge.

### RELATED DOCUMENT

### PATENT DOCUMENT

Patent Document 1: Japanese Patent Application Publication (Translation of PCT Application) No. 2018-521481

### DISCLOSURE OF THE INVENTION

### TECHNICAL PROBLEM

### (Aspect 1)

Relatively high heat may be generated around the sealing edge of an exterior member. For example, relatively high heat may be caused by welding between parts of an accommodation body that accommodates a battery cell. The sealing of the sealing edge may be influenced by heat as described above.

One example of an object of an aspect 1 of the present invention is to make the sealing of the sealing edge less susceptible to heat. Another object of the aspect 1 of the present invention is made clear from description of the present specification.

### (Aspect 2)

In the battery cell described in Patent Document 1, a tape that fixes a bending shape of a sealing edge is provided over the entirety of the sealing edge. The tape provided over the entirety of the sealing edge, however, may make it difficult to secure heat dissipation of the battery cell. The absence of the tape, on the other hand, may make it difficult to maintain the bending shape of the sealing edge.

One example of an object of an aspect 2 of the present invention is to fix a bending shape of a sealing edge of an exterior member while securing heat dissipation of a battery cell. Another object of the aspect 2 of the present invention is made clear from description of the present specification.

### SOLUTION TO PROBLEM

The aspect 1 of the present invention is as follows.
[1.1] A battery cell including:
   a battery element;
   an exterior member that accommodates the battery element; and
   a heat resistant body that covers at least a part of a sealing edge of the exterior member.
[1.2] The battery cell according to [1.1], wherein
   the sealing edge is bent into a predetermined bending shape, and
   the heat resistant body fixes the bending shape of the sealing edge.
[1.3] The battery cell according to [1.1] or [1.2], wherein
   the heat resistant body has insulation, and
   the heat resistant body covers at least a part of at least one of opposite ends of the sealing edge.
[1.4] A battery module including
   a plurality of battery cells stacked in a predetermined direction, wherein
   the battery cell according to any one of [1.1] to [1.3] is disposed on at least one of opposite ends of the plurality of battery cells in the predetermined direction.

The aspect 2 of the present invention is as follows.
[2.1] A battery cell including:
   a battery element;
   an exterior member including a sealing edge bent into a predetermined bending shape, the exterior member accommodating the battery element; and
   a first fixing body that fixes the bending shape of the sealing edge, wherein
   the first fixing body is partially provided on the sealing edge.
[2.2] The battery cell according to [2.1], further including
   a second fixing body that fixes a stack shape of a positive electrode, a negative electrode, and a separator included in the battery element, wherein
   the first fixing body and the second fixing body are displaced from each other along the sealing edge.
[2.3] A battery module including
   a plurality of the battery cells according to [2.1] or [2.2] that are electrically connected to one another. Advantageous Effects of Invention

According to the aspect 1 of the present invention, the sealing of the sealing edge can be less susceptible to heat.

According to the aspect 2 of the present invention, the bending shape of the sealing edge of the exterior member can be fixed while heat dissipation of the battery cell is secured.

### Brief Description of the Drawings

[Fig. 1] An exploded perspective view of a battery module according to an embodiment.
[Fig. 2] A top view of a battery cell according to the embodiment.
[Fig. 3] A front view of the battery cell according to the embodiment.
[Fig. 4] A perspective view of a battery element according to the embodiment.
[Fig. 5] A diagram for describing a battery cell located at the rightmost end of a cell stack according to the embodiment.

### DESCRIPTION OF EMBODIMENTS

Hereinafter, an embodiment according to the present invention is described by using the drawings. In all drawings, a similar constituent element is indicated by a similar reference sign, and description thereof is omitted as necessary.

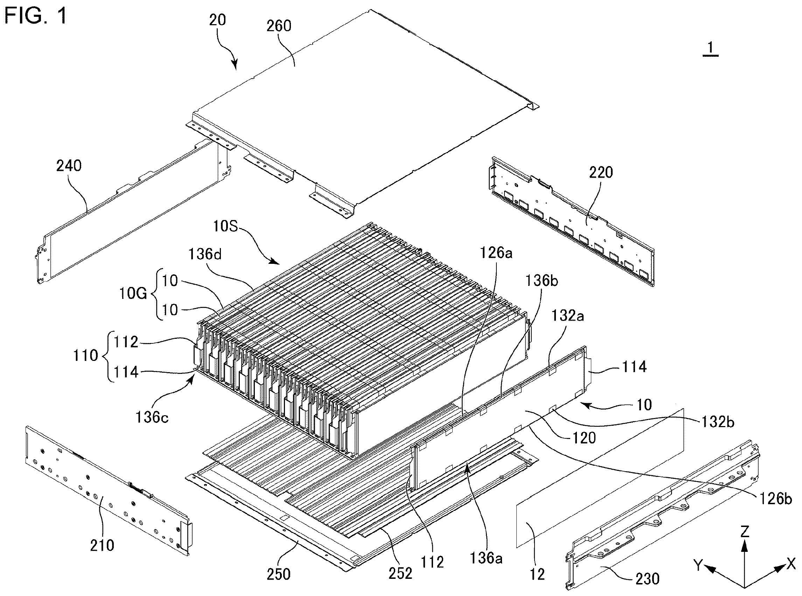

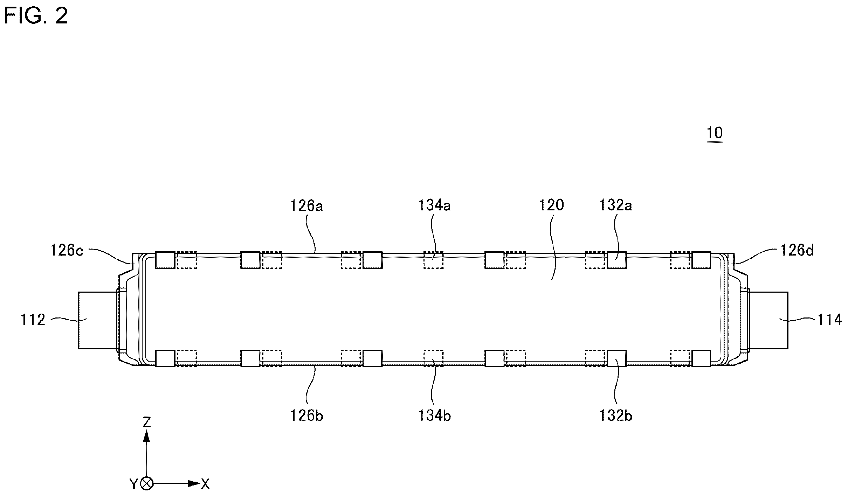

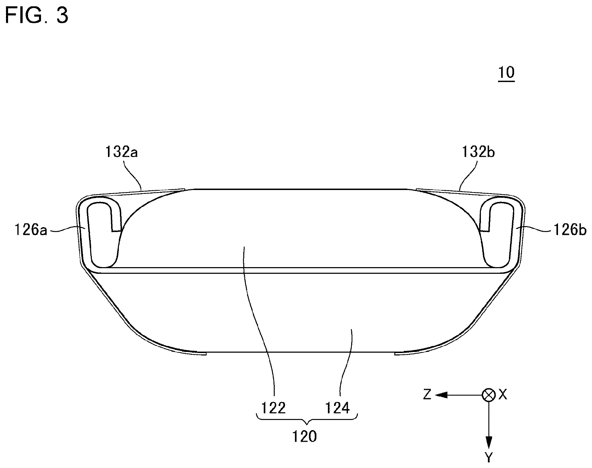

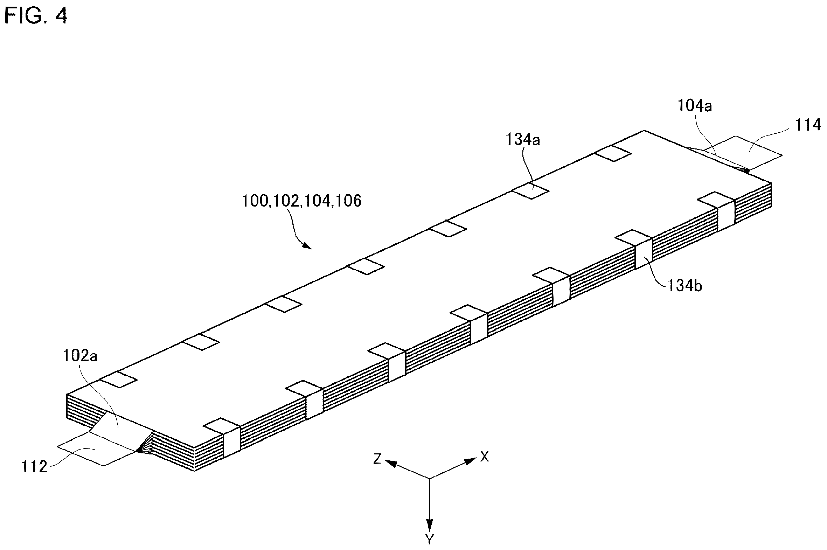

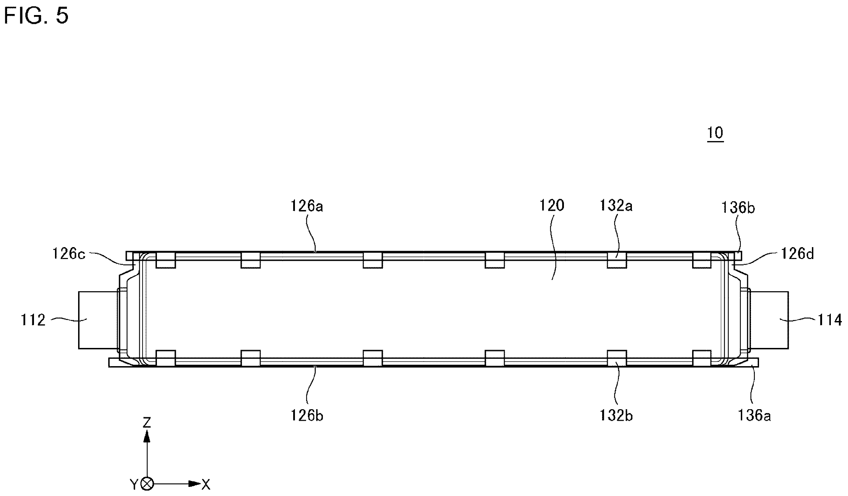

Fig. 1 is an exploded perspective view of a battery module 1 according to an embodiment. Fig. 2 is a top view of a battery cell 10 according to the embodiment. Fig. 3 is a front view of the battery cell 10 according to the embodiment. Fig. 4 is a perspective view of a battery element 100 according to the embodiment. Fig. 5 is a diagram for describing a battery cell 10 located at the rightmost end of a cell stack 10S according to the embodiment. In Fig. 3, for description, a positive electrode tab 112 and a negative electrode tab 114 are not illustrated.

In each drawing, an X direction, a Y direction, and a Z direction are attached for description.

In Fig. 1, the X direction, the Y direction, and the Z direction are defined as follows. The X direction indicates a front-rear direction of the battery module 1. The Y direction is orthogonal to the X direction. The Y direction indicates a left-right direction of the battery module 1. The Z direction is orthogonal to both of the X direction and the Y direction. The Z direction indicates an up-down direction of the battery module 1. A direction pointed by an arrow indicating the X direction, a direction pointed by the arrow indicating the Y direction, and a direction pointed by the arrow indicating the Z direction are a rear direction, a left direction, and an up direction respectively. However, the relationship of the battery module 1 among the X direction, the Y direction, the Z direction, the front-rear direction, the left-right direction, and the up-down direction is not limited to this example.

In Figs. 2 to 5, the X direction, the Y direction, and the Z direction are defined as follows. The X direction indicates a front-rear direction of the battery cell 10. The Y direction is orthogonal to the X direction. The Y direction indicates an up-down direction of the battery cell 10. The Z direction is orthogonal to both of the X direction and the Y direction. The Z direction indicates a left-right direction of the battery cell 10. A direction pointed by the arrow indicating the X direction, a direction pointed by the arrow indicating the Y direction, and a direction pointed by the arrow indicating the Z direction are a rear direction, a down direction, and a left direction respectively. Specifically, in Fig. 1, each battery cell 10 is disposed with the left-right direction and the up-down direction of the battery cell 10 being substantially in parallel to the up-down direction and the left-right direction of the battery module 1 respectively. However, the relationship of the battery cell 10 among the X direction, the Y direction, the Z direction, the front-rear direction, the left-right direction, and the up-down direction is not limited to this example.

The X-mark attached white circle indicating the X direction, the Y direction, or the Z direction indicates that a direction directed from a front to a depth on a surface of paper is a direction pointed by the arrow indicating the direction.

Referring to Fig. 1, the battery module 1 is described with reference to Fig. 4 as necessary.

The battery module 1 includes the cell stack 10S and an accommodation body 20.

The cell stack 10S includes a plurality of battery cells 10 and a plurality of compression pads 12. The plurality of battery cells 10 and the plurality of compression pads 12 are alternately stacked one over another in the Y direction. The long direction of each battery cell 10 is substantially in parallel to the X direction. The short direction of each battery cell 10 is substantially in parallel to the Z direction. The thickness direction of each battery cell 10 is substantially in parallel to the Y direction. The shape of each battery cell 10 is not limited to this example.

As illustrated in Figs. 1 and 4, each battery cell 10 includes a battery element 100, the positive electrode tab 112, the negative electrode tab 114, and an exterior member 120.

As illustrated in Fig. 4, the battery element 100 includes a stack of a plurality of positive electrodes 112, a plurality of negative electrodes 104, and a plurality of separators 106. The plurality of positive electrodes 102 and the plurality of negative electrodes 104 are stacked one over another in the Y direction. Each separator 106 is located between a positive electrode 102 and a negative electrode 104 adjacent to each other in the Y direction. However, the structure of the battery element 100 is not limited to this example. The battery element 100 may include a stack of at least one positive electrode 102, at least one negative electrode 104, and at least one separator 106. For example, one sheet-like separator 106 may be formed in a zigzag shape by alternately folding back at opposite ends thereof in the Z direction. In this example, a portion of the separator 106 located between the folded portions at opposite ends in the Z direction is disposed between the positive electrode 102 and the negative electrode 104 adjacent to each other in the Y direction.

As illustrated in Fig. 4, the positive electrode tab 112 is electrically connected to the plurality of positive electrodes 102 of the battery element 100 via a plurality of positive electrode current collectors 102a drawn out from the plurality of positive electrodes 102 of the battery element 100. The negative electrode tab 114 is electrically connected to the negative electrode 104 of the battery element 100 via a plurality of negative electrode current collectors 104a drawn out from the plurality of negative electrodes 104 of the battery element 100. In the example illustrated in Fig. 4, the positive electrode tab 112 is drawn out toward the front of the battery element 100. The negative electrode tab 114 is drawn out toward the rear of the battery element 100.

The exterior member 120 accommodates the battery element 100 and unillustrated electrolytic liquid.

In the embodiment, the plurality of battery cells 10 are electrically connected to one another. Specifically, a plurality of cell groups 10G are connected in series from the cell group 10G located at one end in the Y direction to the cell group 10G located at the other end in the Y direction. Each cell group 10G includes a plurality of battery cells 10 connected in parallel to one another. In the embodiment, each cell group 10G includes two battery cells 10 adjacent to each other in the Y direction. The two positive electrode tabs 112 drawn out from the two battery cells 10 included in each cell group 10G face the same side in the X direction. The two negative electrode tabs 114 drawn out from the two battery cells 10 included in each cell group 10G face the same side in the X direction. The positive electrode tab 112 and the negative electrode tab 114 drawn out from one of the cell groups 10G adjacent to each other in the Y direction and the positive electrode tab 112 and the negative electrode tab 114 drawn out from the other of the cell groups 10G adjacent to each other in the Y direction face opposite sides in the X direction. The two cell groups 10G adjacent to each other in the Y direction include a tab group 110 located on the front side or the rear side of the two cell groups 10G. The tab group 110 includes a positive electrode tab 112 and a negative electrode tab 114 joined to each other. The positive electrode tab 112 and the negative electrode tab 114 included in the tab group 110 are joined to each other, for example, by laser welding. Thus, a plurality of tab groups 110 located on the front of the cell stack 10S and a plurality of tab groups 110 located on the rear of the cell stack 10S are alternately disposed.

The structure of the cell stack 10S is not limited to the above example. For example, each cell group 10G may include three or more battery cells 10 connected in parallel to one another. Alternatively, a plurality of single battery cells 10 may be connected in series from the battery cell 10 located at one end in the Y direction to the battery cell 10 located at the other end in the Y direction.

The accommodation body 20 accommodates the cell stack 10S. The accommodation body 20 includes a front plate 210, a rear plate 220, a right plate 230, a left plate 240, a lower plate 250, and an upper plate 260. The front plate 210, the rear plate 220, the right plate 230, the left plate 240, the lower plate 250, and the upper plate 260 cover the front side, the rear side, the right side, the left side, the lower side, and the upper side of the cell stack 10S respectively. A thermally conductive adhesive 252 is disposed between the cell stack 10S and the lower plate 250.

As will be described later in details with reference to Fig. 5, a first protective tape 136a and a second protective tape 136b are respectively provided on the lower end portion and the upper end portion of the exterior member 120 of the battery cell 10 located at the rightmost end of the cell stack 10S. Likewise, a third protective tape 136c and a fourth protective tape 136 are respectively provided on the lower end portion and the upper end portion of the exterior member 120 of the battery cell 10 located at the leftmost end of the cell stack 10S.

Next, with reference to Figs. 2 and 3, and with reference to Figs. 1 and 4 as necessary, each battery cell 10 is described.

As illustrated in Fig. 3, the exterior member 120 includes an upper exterior member 122 and a lower exterior member 124. The upper exterior member 122 covers an upper portion of the battery element 100. The lower exterior member 124 covers a lower portion of the battery element 100. The outer peripheral portions of the upper exterior member 122 and the lower exterior member 124 around the Y direction of the battery element 100 are joined to each other, for example, by thermal fusion. Thus, as illustrated in Fig. 2, a left sealing edge 126a, a right sealing edge 126b, a front sealing edge 126c, and a rear sealing edge 126d are formed on the outer peripheral portions of the upper exterior member 122 and the lower exterior member 124 around the Y direction of the battery element 100.

As illustrated in Fig. 3, the left sealing edge 126a is bent into a predetermined bending shape when viewed from the X direction. Specifically, the left sealing edge 126a is bent toward the left side surface of the upper exterior member 122 when viewed from the X direction. The leading end of the left sealing edge 126a is bent toward a space that the bend of the left sealing edge 126a causes between the left sealing edge 126a and the left side surface of the upper exterior member 122 when viewed from the X direction. In the example illustrated in Fig. 3, bending the left sealing edge 126a toward the left side surface of the upper exterior member 122 can suppress leftward protrusion of the left sealing edge 126a. Further, bending the leading end of the left sealing edge 126a toward the above space can suppress upward protrusion of the leading end of the left sealing edge 126a. However, the bending shape of the left sealing edge 126a is not limited to the example illustrated in Fig. 3. Similarly to the left sealing edge 126a, the right sealing edge 126b is also bent into a predetermined bending shape.

A left bending fixing body 132a fixes the bending shape of the left sealing edge 126a. In the embodiment, the left bending fixing body 132a is a tape. For example, the left bending fixing body 132a may be an insulating tape such as a resin tape. In the example illustrated in Fig. 3, the left bending fixing body 132a extends to cover the left sealing edge 126a from the left end portion of the upper exterior member 122 to the left end portion of the lower exterior member 124. Accordingly, the bending shape of the left sealing edge 126a can be prevented from returning to the original shape of the left sealing edge 126a even if restoring force acts on the left sealing edge 126a. Similarly to the left bending fixing body 132a, a right bending fixing body 132b also fixes the bending shape of the right sealing edge 126b.

As illustrated in Fig. 2, a plurality of the left bending fixing bodies 132a are provided away from one another on the left sealing edge 126a. Specifically, the left bending fixing body 132a is partially provided on the left sealing edge 126a. Accordingly, the heat dissipation of the battery cell 10 can be secured as compared to when the left bending fixing body 132a is provided over the entirety of the left sealing edge 126a.

As illustrated in Fig. 2, a plurality of the right bending fixing bodies 132b are provided away from one another on the right sealing edge 126b. Specifically, the right bending fixing body 132b is partially provided on the right sealing edge 126b. Accordingly, the heat dissipation of the battery cell 10 can be secured as compared to when the right bending fixing body 132b is provided over the entirety of the right sealing edge 126b. For example, in the embodiment, the contact area of the right sealing edge 126b and the thermally conducive adhesive 252 can be increased as compared to when the right bending fixing body 132b is provided over the entirety of the right sealing edge 126. In the embodiment, therefore, the heat dissipation of the battery cell 10 can be improved as compared to when the right bending fixing body 132b is provided over the entirety of the right sealing edge 126b.

In light of fixing the bending shape of the left sealing edge 126b, it is preferable that at least one left bending fixing body 132a is provided by a length of 15 % or more with respect to the entirety of the left sealing edge 126a in the X direction. The same is also applied to the right bending fixing body 132b.

In light of securing the heat dissipation of the battery cell 10, it is preferable that at least one left bending fixing body 132a is provided by a length of 30 % or less with respect to the entirety of full length of the left sealing edge 126a in the X direction. The same is also applied to the right bending fixing body 132b.

As illustrated in Fig. 4, a plurality of left stack fixing bodies 134a are provided away from one another on the left side of the battery element 100. Likewise, a plurality of right stack fixing bodies 134b are provided away from one another on the right side of the battery element 100. In the embodiment, each left stack fixing body 134a and each right stack fixing body 134b are a tape. For example, each left stack fixing body 134a and each right stack fixing body 134b may be an insulating tape such as a resin tape. Each left stack fixing body 134a and each right stack fixing body 134b fix the stack shape of the positive electrode 102, the negative electrode 104, and the separator 106.

As illustrated in Fig. 2, the left bending fixing body 132a and the left stack fixing body 134a are displaced from each other along the left sealing edge 126a. In the example illustrated in Fig. 2, any left bending fixing body 132a does not overlap any left stack fixing body 134a in the Y direction. Accordingly, the thickness of the battery cell 10 in the Y direction can be reduced as compared to when the left bending fixing body 132a and the right bending fixing body 132b overlap each other in the Y direction. However, the left bending fixing body 132a and the left stack fixing body 134a may overlap each other in the Y direction. Similarly to the left bending fixing body 132a and the left stack fixing body 134a, the right bending fixing body 132b and the right stack fixing body 134b are displaced from each other along the right sealing edge 126b.

In the example illustrated in Fig. 1, the left bending fixing body 132a provided on each battery cell 10 is disposed at a substantially aligned position in the X direction. Accordingly, the mass productivity of the battery cell 10 can be improved as compared to when the left bending fixing body 132a is provided at a different position according to each battery cell 10. However, the left bending fixing body 132a provided on each battery cell 10 may be displaced from each other in the X direction. For example, as the left bending fixing body 132a provided on each of the battery cells 10 adjacent to each other in the Y direction is displaced from each other in the X direction, the thickness of the cell stack 10S in the Y direction can be reduced as compared to when these left bending fixing bodies 132a are aligned in the X direction. The above matter concerning the left bending fixing body 132a is also applied to the right bending fixing body 132b.

Next, with reference to Fig. 5, and with reference to Fig. 1 as necessary, the battery cell 10 located at the rightmost end of the cell stack 10S is described. Hereinafter, in the following description, unless otherwise specifically mentioned, regarding a direction concerning the battery cell 10, the Z direction is a left-right direction.

The first protective tape 136a covers the entirety of the right sealing edge 126b. The first protective tape 136a has heat resistance. Therefore, the first protective tape 136a serves as a heat resistant body to protect the right sealing edge 126b. For example, the welding between the lower end portion of the right plate 230 and the right end portion of the lower plate 250 may cause relatively high temperature heat around the right sealing edge 126b. In the embodiment, the first protective tape 136a can protect the right sealing edge 126b from the heat. For this reason, the sealing of the right sealing edge 126b can be less susceptible to the heat.

The heat resistance of the first protective tape 136a is decided, for example, by a material composing the first protective tape 136a and a thickness of the first protective tape 136a. The first protective tape 136a is composed of, for example, resin such as polyethylene terephthalate (PET) or polypropylene (PP). In this example, the first protective tape 136a has a thickness of, for example, 0.1 mm or more. In this case, the first protective tape 136a can function as a heat resistant body. Alternatively, the first protective tape 136a may be composed of resin having higher heat resistance than heat resistance of PET or PP. Examples of the resin include polyimide, for example. In this example, the thickness of the first protective tape 136a may be less than 0.1 mm.

The heat resistance temperature of the first protective tape 136a may be equal to or lower than the heat resistance temperature of an outermost layer of the exterior member 120. The outermost layer of the exterior member 120 may be composed of, for example, PET or nylon. For example, even if the above welding causes relatively high temperature heat around the right sealing edge 126b, the heat lasts for relatively short period. In view of this, the first protective tape 136a only needs to withstand the heat for the short period. Therefore, the heat resistance temperature of the first protective tape 136a is not necessarily required to be higher than the heat resistance temperature of the outermost layer of the exterior member 120. However, the heat resistance temperature of the first protective tape 136a may be higher than the heat resistance temperature of the outermost layer of the exterior member 120.

The front end of the first protective tape 136a is located forwardly of the front end of the right sealing edge 126b. This allows the front end of the first protective tape 136a to cover at least a part of the front end of the right sealing edge 126b. Therefore, the first protective tape 136a can protect the front end of the right sealing edge 126b from the heat described above. The first protective tape 136a may have insulation. A conductor such as an aluminum sheet included in the exterior member 120 may be exposed from the front end of the right sealing edge 126b. The short circuit between the conductor of the exterior member 120 and the accommodation body 20 such as the right plate 230 can be suppressed by covering at least a part of the front end of the right sealing edge 126b with the insulative first protective tape 136a.

The rear end of the first protective tape 136a is located rearwardly of the rear end of the right sealing edge 126b. This allows the rear end of the first protective tape 136a to cover at least a part of the rear end of the right sealing edge 126b. Therefore, the first protective tape 136a can protect the rear end of the right sealing edge 126b from the heat described above. The second protective tape 136b may have insulation. A conductor such as an aluminum sheet included in the exterior member 120 may be exposed from the rear end of the right sealing edge 126b. The short circuit between the conductor of the exterior member 120 and the accommodation body 20 such as the right plate 230 can be suppressed by covering at least a part of the rear end of the right sealing edge 126b with the insulative second protective tape 136b.

Similarly to the right bending fixing body 132b, the first protective tape 136a fixes the bending shape of the right sealing edge 126b. Therefore, the first protective tape 136a also serves as a fixing body to fix the bending shape of the right sealing edge 126b.

The shape of the first protective tape 136a is not limited to the example illustrated in Fig. 5. For example, the position where the first protective tap 136a is provided can be changed as necessary according to a function the first protective tape 136a has.

For example, a case where the first protective tape 136a has heat resistance is described. In this example, when a plurality of welding positions between the lower end portion of the right plate 230 and the right end portion of the lower plate 250 are intermittently disposed along the X direction, a plurality of the first protective tapes 136a may be intermittently disposed along the right sealing edge 126b in association with the plurality of welding positions. Thus, each first protective tape 136a can protect the right sealing edge 126b from heat generated from each welding position. In this example, as described above, the first protective tape 136a may have insulation, in addition to heat resistance.

A case where the first protective tape 136a has insulation is described. In this example, the first protective tape 136a may cover only the front end of the right sealing edge 126b. Alternatively, the first protective tape 136a may cover only the rear end of the right sealing edge 126b. Alternatively, the first protective tape 136a may cover only the front end and the rear end of the right sealing edge 126b. This can suppress the short circuit between the above conductor of the exterior member 120 and the accommodation body 20 such as the right plate 230 as discussed above. In these examples, as described above, the first protective tape 136a may have heat resistance, in addition to insulation.

Similarly to the first protective tape 136a, the second protective tape 136b covers the entirety of the left sealing edge 126a. Similarly to the front end of the first protective tape 136a, the front end of the second tape 136b protrudes forwardly of the front end of the left sealing edge 126a. Similarly to the rear end of the first protective tape 136a, the rear end of the second protective tape 136b protrudes rearwardly of the rear end of the left sealing edge 126a. For example, the welding between the upper end portion of the right plate 230 and the right end portion of the upper plate 260 may cause relatively high temperature heat around the left sealing edge 126a. In the embodiment, the second protective tape 136b can protect the left sealing edge 126a from the heat. For this reason, the sealing of the left sealing edge 126a can be less susceptible to the heat. However, similarly to the shape of the first protective tape 136a, the shape of the second protective tape 136b is not limited to this example.

The above structure of the battery cell 10 located at the rightmost end of the cell stack 10S is also similarly applicable to structure of the battery cell 10 located at the leftmost end of the cell stack 10S. For example, the welding between the lower end portion of the left plate 240 and the left end portion of the lower plate 250 may cause relatively high temperature heat around the right sealing edge 126b of the battery cell 10 located at the leftmost end of the cell stack 10S. In the embodiment, the third protective tape 136c can protect the right sealing edge 126b of the battery cell 10 from the heat. Likewise, for example, the welding between the upper end portion of the left plate 240 and the left end portion of the upper plate 260 may cause relatively high temperature heat around the left sealing edge 126a of the battery cell 10 located at the leftmost end of the cell stack 10S. In the embodiment, the fourth protective tape 136d can protect the left sealing edge 126a of the battery cell 10 from the heat.

The protective tape is also applicable to the battery cell 10 other than the battery cell 10 located at the leftmost end and the rightmost end of the cell stack 10S. Specifically, the protective tape may be applied to at least one of the left sealing edge 126a and the right sealing edge 126b of the exterior member 120 of at least one battery cell 10 included in the cell stack 10S.

The heat resistant body to cover at least a part of a sealing edge of the exterior member 120 is not limited to the protective tape. The heat resistant body may be, for example, liquid-like or gel-like substance having heat resistance and insulation. In this example, the substance may be solidified by applying the substance to at least a part of a sealing edge. Alternatively, the heat resistant body may be a foaming body such as sponge.

In the embodiment, the protective tape protects a sealing edge of the exterior member 120 from heat caused by welding between parts of the accommodation body 20. However, the protective tape may protect a sealing edge of the exterior member 120 also from heat different from the heat caused by welding between parts of the accommodation body 20.

In the foregoing, an embodiment according to the present invention has been described with reference to the drawings; however, these are examples of the present invention, and various configurations other than the above can also be adopted.

For example, in the embodiment, the exterior member 120 is formed by thermal fusion of two exterior members of the upper exterior member 122 and the lower exterior member 124. However, one sheet exterior member 120 may be wrapped around the X direction of the battery element 100. In this case, a sealing edge of the exterior member 120 is formed on the left side or the right side of the battery element 100. Also in this example, similarly to the embodiment, a fixing body to fix the bending shape of the sealing edge may be partially provided on the sealing edge.

This application claims priorities based on Japanese patent application No. 2022-113839 filed on July 15, 2022 and Japanese patent application No. 2022-113840 filed on July 15, 2022, the disclosure of which are incorporated herein in its entirety by reference.

### REFERENCE SIGNS LIST

1 Battery module, 10 Battery cell, 10G Cell group, 10S Cell stack, 12 Compression pad, 20 Accommodation body, 100 Battery element, 102 Positive electrode, 102a Positive electrode current collector, 104 Negative electrode, 104a Negative electrode current collector, 106 Separator 110 Tab group, 112 Positive electrode tab, 114 Negative electrode tab, 120 Exterior member, 122 Upper exterior member, 124 Lower exterior member, 126a Left sealing edge, 126b Right sealing edge, 126c Front sealing edge, 126d Rear sealing edge, 132a Left bending fixing body, 132b Right bending fixing body, 134a Left stack fixing body, 134b Right stack fixing body, 136a First protective tape, 136b Second protective tape, 136c Third protective tape, 136d Fourth protective tape, 210 Front plate, 220 Rear plate, 230 Right plate, 240 Left plate, 250 Lower plate, 252 Thermally conductive adhesive, 260 Upper plate

## Claims

1. A battery cell comprising:
a battery element;
an exterior member that accommodates the battery element; and
a heat resistant body that covers at least a part of a sealing edge of the exterior member.

2. The battery cell according to claim 1, wherein
the sealing edge is bent into a predetermined bending shape, and
the heat resistant body fixes the bending shape of the sealing edge.

3. The battery cell according to claim 1, wherein
the heat resistant body has insulation, and
the heat resistant body covers at least a part of at least one of opposite ends of the sealing edge.

4. The battery cell according to claim 2, wherein
the heat resistant body has insulation, and
the heat resistant body covers at least a part of at least one of opposite ends of the sealing edge.

5. A battery module comprising
a plurality of battery cells stacked in a predetermined direction, wherein
the battery cell according to any one of claims 1 to 4 is disposed on at least one of opposite ends of the plurality of battery cells in the predetermined direction.

6. A battery cell comprising:
a battery element;
an exterior member including a sealing edge bent into a predetermined bending shape, the exterior member accommodating the battery element; and
a first fixing body that fixes the bending shape of the sealing edge, wherein
the first fixing body is partially provided on the sealing edge.

7. The battery cell according to claim 6, further comprising
a second fixing body that fixes a stack shape of a positive electrode, a negative electrode, and a separator included in the battery element, wherein
the first fixing body and the second fixing body are displaced from each other along the sealing edge.

8. A battery module comprising
a plurality of the battery cells according to claim 6 or 7 that are electrically connected to one another.
